# EUROPEAN PATENT SPECIFICATION

(11) **EP 2 553 870 B1**
(45) Date of publication and mention of the grant of the patent: **22.01.2020**
(21) Application number: 10849104.4
(22) Date of filing: 31.03.2010
(51) Int. Cl.: H04L 12/24, H04W 8/00, H04L 12/26

(54) **AN OPERATIONS, ADMINISTRATIONS AND MANAGEMENT PROXY AND A METHOD FOR HANDLING OPERATIONS, ADMINISTRATIONS AND MANAGEMENT MESSAGES**
BETRIEBS-, ADMINISTRATIONS- UND MANAGEMENT-PROXY SOWIE VERFAHREN ZUR HANDHABUNG VON BETRIEBS-, ADMINISTRATIONS- UND MANAGEMENTNACHRICHTEN
MANDATAIRE D'EXPLOITATION, D'ADMINISTRATION ET DE GESTION, ET PROCÉDÉ POUR TRAITER DES MESSAGES D'EXPLOITATION, D'ADMINISTRATION ET DE GESTION

(43) Date of publication of application: 06.02.2013
(73) Proprietor: Telefonaktiebolaget LM Ericsson (publ), 164 83 Stockholm (SE)
(72) Inventor: WELIN, Annikki, S-171 60 Solna (SE); GOTARE, Christian, S-310 44 Getinge (SE); KÖLHI, Johan, S-185 39 Vaxholm (SE); THYNI, Tomas, S-175 66 Järfälla (SE)
(74) Representative: Brann AB
(86) International application number: PCT/SE2010/050355
(87) International publication number: WO 2011/123003

(56) References cited:
- EP-A2- 1 596 531
- WO-A1-96/12363
- WO-A1-2007/058916
- US-A1- 2002 062 388
- US-A1- 2008 232 375
- US-A1- 2009 310 483
- US-A1- 2010 020 719

## Description

### Technical field

The present invention relates generally to a method and arrangement for handling Operations, Administration, and Management (OAM) messages, and more specifically to a method and arrangement for reducing the required amount of such messages.

### Background art

The Operations, Administrations, and Management (OAM) discloses various processes, activities, tools and standards which are configured for supporting operating, administering, managing and maintaining network nodes of communication systems, such as e.g. routers and switches.

Several standardization bodies, such as e.g. Internet Engineering Task Force (IETF) and International Telecommunication Union, Telecommunication standardization section (ITU-T) are continuously standardizing new functions to be applied for OAM packet distribution between network nodes of communication systems and for measuring liveliness and connectivity of such nodes.

Fault management and performance monitoring (ITU-TY.1731) is a standard developed by ITU-T for performing performance monitoring measurements, such as e.g. frame loss ratio, frame delay and frame delay variation to assist with Service level Agreement (SIA) assurance and capacity planning. For fault management purposes the ITU-TY.1731 standard defines continuity checks, loopbacks, link trace and alarm suppression which enables effective fault detection via Automatic Identification Signals (AIS) and Reverse Detect Indication (RDI).

Connectivity fault management (IEEE802.1ag or similar) is another standard which defines mechanisms for performing continuity checks, loopbacks and link trace for fault management capabilities in enterprise and carrier networks. This standard also partitions the network into hierarchical administrative domains.

OAM traffic may typically be generated by the link layer (802. 1ag or similar) standard and its applicable routing protocols. Referring to developments in Ethernet OAM, the IEEE 802. 1ag standard defines discovery for all Provider Edges (PEs), supporting a common service instance and/ or discovery for all devices, i.e. all PEs and Provider Routers (Ps) which are common to a single network domain.

OAM traffic which is sentbetween network nodes for the purpose of measuring liveliness and connectivity may require a considerable amount of bandwidth In this aspect the bandwidth requirements depend on how often OAM messages, or more specifically, OAM measurement packets, are sentbetween network nodes and on how many network nodes that are involved in this type of measurements.

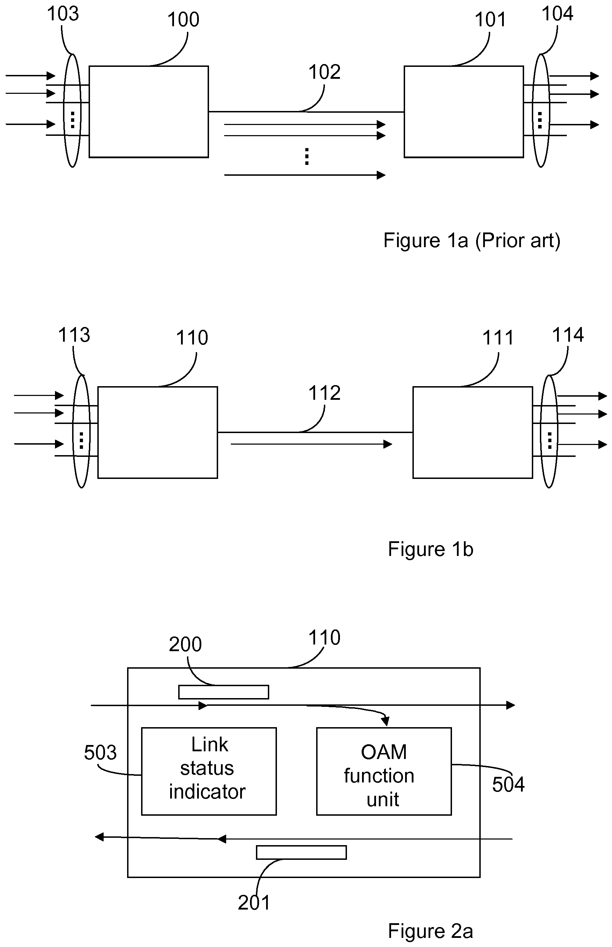

Figure 1a is a simplified illustration of two network nodes 100,101 connected via a link 102, according to the prior art In the present example, network node 100 receives traffic, including OAM traffic, from a plurality of different sources, or originating network nodes (not shown), via a plurality of input connections or links 103. Network node 100 aggregates the received traffic to link 102, after which network node 101 distributes the traffic arriving via link 102 via any of the output connections or links 104 towards a terminating network node (not shown).

By way of example, the two network nodes 100,101 may have a link which is used as transportation means for a large number of Virtual local Area Networks (VIANs) received via input connections 103, where each of these VIANs initiates an OAM session at a regular interval, such as e.g. every 3.3 ms. If e.g. 1000 VLANs was to be connected to network node 100, such a scenario would result in a total OAM traffic of 300 messages every 1 ms, which makes 300 000 messages per second which need to be distributed to network node 101 via link 102. Not only is this a large amount of traffic which requires a lot of bandwidth resources - all these massages also have the same purpose, namely to check the state of the same physical transport link, namely link 102.

US patent application 2002/062388 A1 discusses a system and a method for disseminating topology and link-state information to routing nodes in a mobile ad hoc network. The document describes a link-state routing protocol used in a mobile ad hoc network or in an Internet for disseminating topology and link-state information throughout the network. According to the document, reverse-path forwarding is used to broadcast each update along the minimum-hop-path tree rooted at the source of the update. Each path tree has the source node as a root node, a parent node, and zero or more children nodes. Updates are received from the parent node in the path tree for the source node that originates the update. Each update includes information related to a link in the network. A determination is made whether to forward the update message to children nodes, if any, in the path tree maintained for the source node originating the update in response to information in the received update. This information itself can indicate whether the update is to be forwarded to other nodes.

US patent application 2010/020719 A1 discusses automatic maintenance of a distributed source tree (DST) network. According to the document, an automatically maintained DST network has a plurality of fully connected internal nodes. One or more internal nodes may be connected to one or more external nodes. A first internal node synchronizes its link-state database with another internal node by sending and receiving respective Reduced Sequence Number Packet-Data-Units (PDUs) (RSNPs). An RSNP includes summary information for link-state packets (LSPs) (1) originated by the first internal node, (2) received by the first internal node from the other internal node, and (3) received from and/or originated by external nodes. If an internal link fails, then the corresponding end-nodes may recover and maintain automatic DST operation by entering either relay-mode or switch-mode operation. In relay-mode operation, an end-node tunnels packets to the other end-node via an intermediary node. In switch-mode operation, an intermediary node is selected to forward packets from one end-node to the other end-node.

### Summary of invention

An object of the present invention is to address the problem mentioned above, i.e. to avoid transmission of redundant information via a transmission link interconnecting two network nodes of a communications network.

According to one aspect, a method of handling OAM messages received from at least one originating end-node of a communication network for the purpose of providing information on the connectivity between a respective originating end- node and a corresponding terminating end-node
is provided. The method, which is executable on a first intermediate node, is arranged such that the amount of the OAM messages forwarded from the first intermediate node to a second intermediate node via a physical link is limited by forwarding a received OAM message via the physical link in case a link state indicator associated with the physical link is not updated, or if another corresponding OAM message has not been received recently by the first intermediate node, and by responding to the received OAM message on the basis of the link state indicator without forwarding it via the physical link in case the indicator is updated, or if the another corresponding OAM message has been received recently by the first intermediate node, said link state indicator is updatable on the basis of a response to an intermediate OAM message, originating at the first intermediate node.

By allowing intermediate OAM messages to be used for updating of a link status indicator, the distribution of a plurality of OAM messages having the same purpose can be avoided. An advantage from using the proposed intermediate OAM messages is that the amount of OAM related traffic transmitted between the intermediate network nodes can be reduced considerably.

Whether or not the link state indicator is updated may be determined on the basis of content of a link state table.

The step of updating the link state indicator may comprise the further steps of: generating an intermediate OAM message and transmitting the generated intermediate OAM message to the second intermediate node; receiving a response to the intermediate OAM message or recognizing the absence of responses to a predefined number of intermediate OAM messages, and updating the link state indicator on the basis of the response or absence of response.

The updating of the link state indicator may be repeated at a predefined rate, which may typically be selected such that the rate of OAM messages transmitted between the two intermediate network nodes can be reduced.

More specifically, the updating procedure may be executable such that the link state indicator is updated to a faulty link state, in case no response to a predefined number of consecutive internal OAM messages have been received within a predefined response time interval, and such that an error message indicating said faulty link state is distributed.

According to one embodiment, the updated link state indicator may be valid for a predetermined update time interval.

According to another aspect, an arrangement for handling OAM messages received from at least one first end-node of a communication network and having the purpose of providing information on the connectivity between the first end-node and a second id provided.

The arrangement comprises a detection unit which is configured to limit the amount of OAM messages forwarded from the arrangement to an intermediate node via a physical link by forwarding a received OAM message via the physical link via an OAM function unit in case a link state indicator associated with the physical link is not updated, or if another corresponding OAM message has not been received recently by the first intermediate node and by responding to a received OAM message on the basis of the link state indicator without forwarding it via the physical link in case the link state indicator is updated, or if the another corresponding OAM message has been received recently by the arrangement, such a link state indicator is updatable by the OAM function unit on the basis of a response to an intermediate OAM message, other than any of the received OAM messages, the intermediate OAM message originating at the arrangement.

The detection unit may be configured to determine whether the link state indicator is updated or not by interrogating a link state table.

The OAM function unit may be configured to perform the updating by generating an intermediate OAM message and transmitting the generated intermediate OAM message to the intermediate node, and by updating the link state indicator on the basis of a response to the intermediate OAM message received from the intermediate node, or on the basis of the absence of responses to a predefined number of transmitted intermediate OAM messages.

According to one embodiment, the OAM function unit may be configured to update the link state indicator at a predefined rate, furthermore, the OAM function unit may be adapted to update the link state indicator to a faulty link state, in case no response to a predefined number of consecutive internal OAM messages have been received within a predefined response time interval, and to distribute an error message indicating a faulty link state.

The detection unit may be configured to maintain an updated link state indicator valid for a predetermined update time interval.

The suggested arrangement may be implemented in any type of suitable network node, such as e.g. a router or a switch.

further features of the suggested method and arrangement and its benefits can be understood from the detailed description below.

### Brief description of drawings

The invention is now described, by way of example, with reference to the accompanying drawings, in which:
Fig. 1a is an illustration of a scenario for handling OAM messages to be forwarded from a first network node to a second network node, according to the prior art
Fig.1b is an illustration of another scenario for handling OAM messages ata first network node according to one embodiment
Fig.2a is a simplified illustration of a network node which is adapted to handle OAM message according to one exemplary embodiment shown at a first time instance.
Fig. 2b is another simplified illustration of the network of fig. 2a shown at a second time instance.
Fig. 3 is a flow chart illustrating a method for handling OAM messages according to one exemplary embodiment
Fig. 4 is another flow chart illustrating a method for generating OAM messages at a network node and for handling responses to such messages, according to one exemplary embodiment
Fig. 5 is a block scheme illustrating an exemplary arrangement suitable for performing the method described with reference to figures 3 and 4.
Fig. 6 is another block scheme illustrating one exemplary OAM function unit of the arrangement according to figure 5.

### Description of embodiments

The present document refers to a method and arrangement which enables reduction of the amount of OAM related traffic which is sent between network nodes of a communication network for the purpose of checking the connectivity between the network nodes. Instead of forwarding a plurality of OAM messages having the same task, namely to check connectivity of a link between two network nodes, a method is provided which has the main purpose of avoiding such repeated transmission. The described network node may typically be any kind of network node which is configured to handle OAM related traffic which is distributable within a communications network, such as e.g. a router or a switch.

While different types of OAM messages may be used in communication networks, the OAM messages mentioned in this document are to be referred to as messages having the purpose of checking end-to-end link connectivity.

More specifically the suggested network node may be referred to as a proxy, or an OAM proxy, which provides for an alternative to forwarding all OAM messages received by the proxy. Such a proxy may be particularly efficient when it is adapted to receive OAM traffic from a plurality of different VIANs or other logical interfaces, which may give rise to a large amount of corresponding OAM messages, typically originating from different sources or end network nodes.

Figure 1b is a simplified illustration which compared to the scenario described above with reference to figure 1a describes a scenario where the amount of OAM signaling which needs to be distributed between network nodes may be reduced, i.e. where forwarding of redundant OAM messages between the network nodes is avoided. In the present scenario, network nodes 110,111 are adapted to handle received OAM messages, such that when OAM messages having the purpose of checking the connectivity of link 112 have recently been received by network node 110, corresponding subsequent OAM messages will not be forwarded from network node 110. Instead the result from earlier corresponding connectivity checks will be reused when network node 110 responds to the end network node from which a respective OAM message originated, while OAM messages which have not been handled recently by the network node 110 are distributed to network node 111 in a conventional way. By regulating the rate at which network node 110 perform such a connectivity check the amount of OAM traffic distributed over link 112 may be considerably reduced.

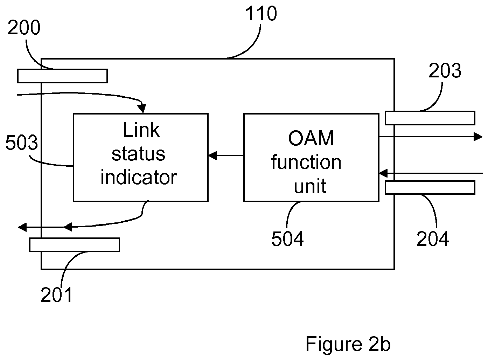

Figure 2a and 2b illustrates the general aspects for handling OAM messages according to one embodiment Figure 2a illustrates network node 110 comprising a link state indicator 503 and an OAM function 504. As indicated in figure 2a, an OAM message 200 which is initially received at network node 110 is not recognized by the network node 110 from any earlier OAM message transmission, and, thus, the OAM message 200 is transmitted further to the subsequent network node in a conventional manner. Accordingly, also a response 201 to the OAM message 200, which is subsequently received and responded to under normal circumstances, i.e. in case of no link failure, is handled at the network node 110 in a conventional manner.

However, in addition to allowing the OAM message 200 to be forwarded and responded to, functionality, here referred to as OAM function unit 504, is responsible for performing connectivity checks from network node 110, typically at a predefined rate, thereby making forwarding of subsequent OAM messages addressing connectivity checks of the same link superfluous. As indicated in the figure, an OAM message is forwarded if no previously registered link state is available at the network node 110.

Figure 2b is an illustration of another scenario, which may typically occur subsequent to the scenario of figure 2a, where an OAM message 203 is generated at, and distributed by network node 110. More specifically, the OAM function unit 504, updates the link state indicator 503 according to a response message 204 received by OAM function unit 504 in response to the OAM message 203. In such a scenario, an OAM message 200 received by the network node 110 is identified as an OAM message for which the link state is already known from the link state indicator 503, and a response 201 to such a received OAM message 200 can therefore be provided to the originating end point, without having to forward the OAM message 200 according to the scenario of figure 2a, and, thus, without having to await a response to the OAM message from another network node.

OAM messages 203 generated at network node 110 will have the same format as the OAM messages 200 received and forwarded by the network node 110, and thus, a network node configured to handle OAM messages will not experience any difference when handling the two types of OAM messages. In order to distinguish the two types of messages from one another, messages 200 received by the network node are referred to as OAM messages, while OAM messages 203 generated at network node 110 maybe referred to as intermediate OAM messages.

In case of link failure, a fault detection message may be generated and transmitted to the originating end point for the purpose of informing it of an erroneous transport link state. Such a fault detection notification mechanism may be based on conventional principles, such that a fault detection message is generated upon expiry of a time interval that equals a predefined amount of times the distribution time for a normal OAM message. Three times the distribution time is e.g. a suitable parameter. Topically the fault detection message may be provided to a routing daemon of the communication network, thereby enabling this network node to make a link state update to other network nodes of the communication network, according to known link state updating procedures, such as e.g. by applying flooding.

The suggested OAM message handling method is especially suitable for use in configurations where a large number of transport links are used as transportation means for a large amount of VIANs towards the network node.

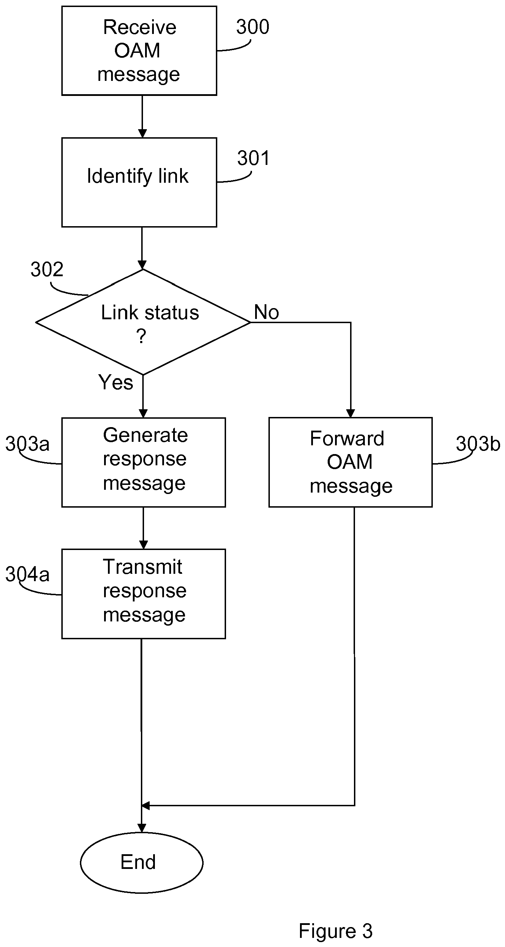

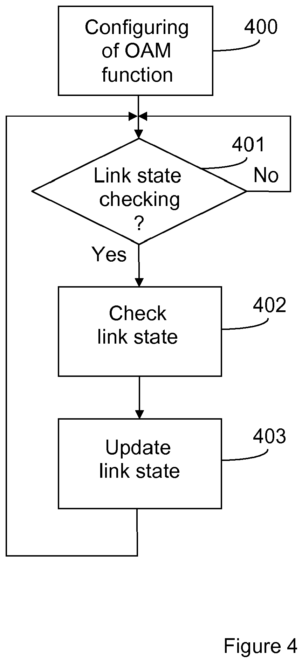

A method for managing OAM messages for the purpose of determining the link state of an end-to-end transport link will now be described in further detail with reference to figure 3 and 4. The suggested method may be executable at a network node, such as e.g. a switch or a router, which is configured to aggregate messages arriving via one of a plurality of incoming transport links into an outgoing transport link which is interconnecting the network node with another network node, which may typically be another switch or router.

As indicated in figure 3, an OAM message transmitted from an end point for the purpose of performing a connectivity check is received and recognized by the switch in a first step 300. In a next step 301 the respective link is identified from content of the OAM message. In a subsequent step 302, it is determined if another corresponding OAM message has been received recently, i.e. if an indication on the link state for the relevant link can be obtained at the network node or not This may e.g. be achieved by interrogating a link state table, which may typically comprise information on the source, the destination and the respective link. If it is determined in step 302 that the link state has been updated, a response message is generated, as indicated with a step 303a and the message is transmitted to the end point from which the OAM message was originally sent, as indicated with a next step 304a. However, in case no updated link status is available, the received OAM message is instead forwarded to the interconnected network node in a conventional way, as indicated in a step 303b.

The suggested method relies on an OAM function having the purpose of generating OAM traffic at a pre-defined rate, and of keeping information on an updated link status available for a predefined time interval. In case a link state table is used, an entry associated with the respective link will remain in the table for the duration of the predetermined time interval, while the entry is removed from the table upon expiry of the time interval. Such a procedure will now be described with reference to figure 4, which illustrates how a link state updating process may run in parallel to the method steps for the purpose of handling local link state requests, as described above with reference to figure 3.

According to figure 4, an OAM function is arranged to transmit a test message, or an intermediate OAM message, comparable to a conventional OAM message, over an outgoing transport link. Generation and distribution of such intermediate OAM messages is typically repeated at a pre-defined time interval. If this time interval corresponds to the time interval used by an end-node for transmissions of traditional OAM messages the failover time will not be affected, while in case a longer time interval is applied, the failover time may increase, while the amount of OAM traffic from the network node is decreased. Such a repeated OAM message process is indicated with step 401. In a next step 402, a link state check is executed, i.e. an intermediate OAM message is generated and transmitted over the outgoing link and subsequently a response is normally recognized, in case of no link failure. Alternatively, a fault detection mechanism may initiate the generation and transmission of a fault detection message. Once a link state check has been executed, the link state is updated, e.g. by updating a link status indicator. It is to be understood that in case the network node comprises more than one outgoing transport links, one OAM function and an associated link state indicator will typically be required for each transport link for which the suggested method is to be applied.

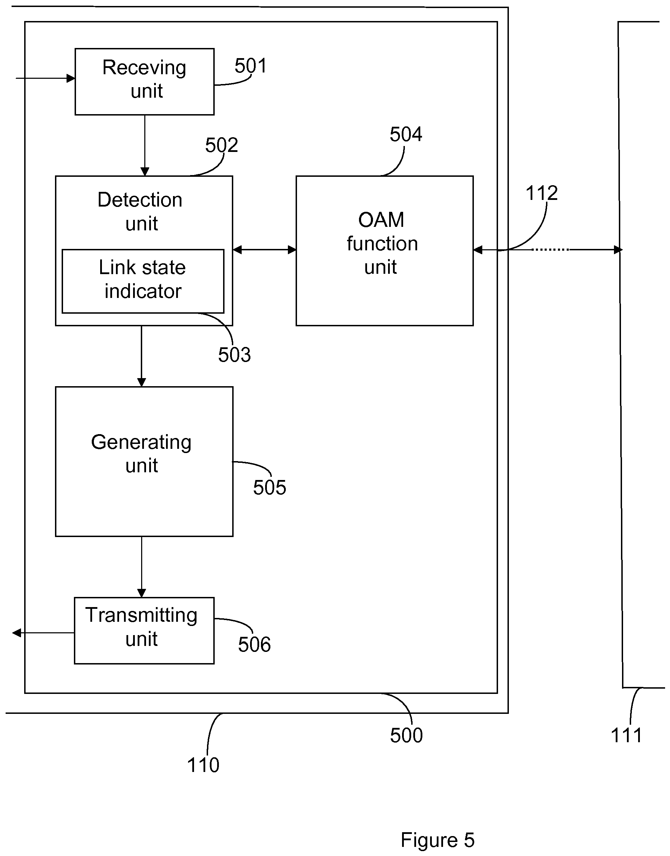

An arrangement for implementation in a network node, such as e.g. a switch, or a router, which typically has a plurality of incoming transport links, and one or more outgoing links, will now be described in further detail below with reference to figure 5. It is to be understood that the arrangement of figure 5 describes a simplified configuration which is suitable for handling OAM messages forwarded to the network node on which the arrangement has been implemented.

In addition to handling OAM messages in a conventional way, the suggested arrangement allows for a reduction of the outgoing OAM traffic, as suggested above. Even though network nodes which are typically configured to handle OAM messages normally comprise a plurality of additional functional entities, only functional units which are necessary for the understanding of the suggested OAM traffic handling process are presented in and described with reference to figure 5, for simplicity reasons.

Arrangement 500 comprises a receiving unit 501, typically comprising one or more ingress interfaces, for receiving OAM messages from one or more endpoints. It is to be understood that even though figure 5 comprise only one incoming link, a typical configuration may comprise a plurality of links, interconnecting a plurality of VIANs or other functional interfaces with arrangement 500 and network node 110. Arrangement 500 also comprises specially adapted functionality, here referred to as a detection unit 502, which is configured to interrogate a received OAM message in order to determined whether it needs to be forwarded or not For this purpose, the detection unit 502 may be configured to identity the end-to end link for which the OAM message has been sent out to check the connectivity. The detection unit 502 is configured to determine whether or not a relevant link state is already registered at the arrangement 500, e.g. by checking a link state indicator 503, as indicated in the figure, or any other registered information. As already mentioned above, a link state table may be applied for indicating for which links there are relevant link state information available. If such a table is applied, the detection unit 502 will be configured to interrogate it upon receiving an OAM message. Such a link state table may typically comprise information on source, destination and the respective end-to-end link.

A link state indicator will typically only be valid for a pre-defined time interval, such that when an OAM message is received after expiry of such a time interval no link state is available to the detection unit 502. In such a situation, the detection unit 502 is configured to forward the OAM message to network node 111 in a conventional manner, e.g. by forwarding the OAM message via an OAM function unit 504 and interconnecting link 112. In case a link state is instead registered at the arrangement 500, the detection unit 502 is instead configured to activate a generating unit 505. The generating unit 505 is configured to generate a response message on the basis of updated link state information, represented by link state indicator 503, and to transmit the response message to the originating end points, via a transmitting unit 506, having one or more egress interfaces, enabling the arrangement to interface with originating network nodes from which OAM messages may have been provided. Thereby, the originating end point will see no difference from this response message, compared to a response message responding to a conventionally forwarded OAM message.

As already mentioned above, the arrangement 500 also comprises an OAM function unit 504, which, in addition to enable forwarding of OAM messages received by the arrangement 500 also configured to generate and transmit intermediate OAM messages over the outgoing link 112. OAM function unit 504 is adapted to transmit intermediate OAM messages at a pre-defined rate, and to provide detection unit 502 access to link state information provided in a response to an intermediate OAM message, where each update will typically also have a duration of a predefined time limit

As already mentioned above, link state information may be provided via an updatable link state indicator 503. In addition, OAM function unit 504 may be configured to generate and transmit an error message, in case no response massage has been received in response to a predefined number of consecutive intermediate OAM messages. Accordingly, in case no response to any of the predefined number of intermediate OAM messages have been received upon expiry of a pre defined time interval, the OAM function unit 504 may be configured to generate and distribute an error message. By providing such a error notifying feature, other network nodes of the communication network will become aware of faulty links also when received OAM messages are not forwarded from the arrangement 500, but responded to on the basis of already available link state information.

In a typical implementation, separate link states may be updatable for each physical interface which is handled by receiving unit 501. Consequently, the detection unit 502 may be configured to handle and provide information separate on each of these different link states. Alternatively, the arrangement may comprise a plurality of separate detection units, each of which is dedicated to handle link state information associated with a specific end-to-end link. Arrangement 500 of figure 5 is configured to manage link state requests for one outgoing link of the network node 110. However, in case the arrangement 500 is configured to handle more than one outgoing link, the detection unit 502 may comprise one link state indicator and one OAM function unit for each outgoing transport link

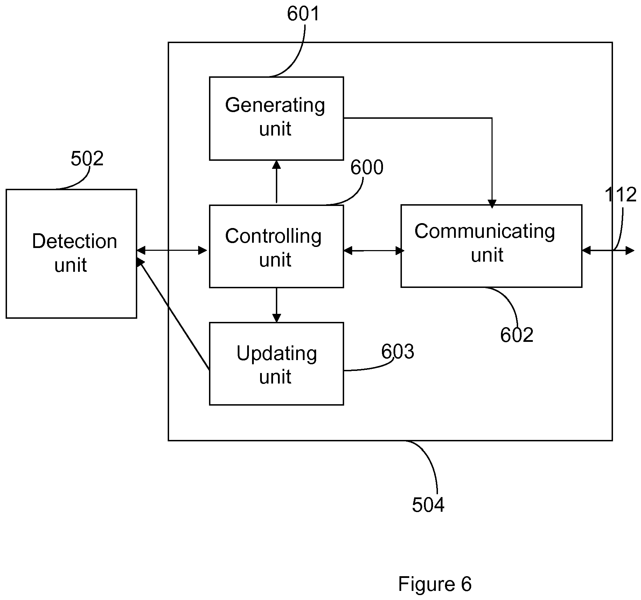

The suggested OAM function unit 504 of figure 5 may be configured according to a plurality of alternative embodiments. One exemplary embodiment will now be described in further detail with reference to figure 6, which is a simplified illustration of the detection unit 502 and OAM function unit 504. More specifically, figure 6 is a simplified illustration for showing how these entities may interact with each other.

According to figure 6, a controlling unit 600 is configured to control the forwarding of OAM messages provided from detection unit 502 and the generation of intermediate OAM messages and the handling of response messages received in response to an intermediate OAM message. Generation of intermediate OAM messages may typically be performed by a generating unit 601 which is controllable by controlling unit 600. The controlling unit 600 may be configured to instruct generating unit 601 to generate an intermediate OAM message at a pre defined interval on the basis of a timer function (not shown) via a conventional communication unit 602, which is also adapted to enable the controlling unit 600 to handle response messages received in response to generated and forwarded OAM messages. In case a link status table is used, the controlling unit 600 may also be configured to access such a table, as well as to remove a link entry from such a table, upon expiry of a time interval deciding the duration of an updated link state.

For the purpose of allowing the rate of OAM messages to be selected by the maintenance staff of the communications network, the OAM function unit 504 may typically comprise some type of user interface (not shown). OAM function unit 504 of figure 6 also comprises an updating unit 603, which is configured to update link state information, e.g. by updating a link state indicator, according to the information provided via a response message. The controlling unit 600 is therefore configured to identify an end-to-end link associated with a response message and to update the respective link state accordingly, such that, the link state may indicate a correctly operable link or link failure.

While the invention has been described with reference to specific exemplary embodiments, the description is generally only intended to illustrate the inventive concept and should notbe taken as limiting the scope of the invention, which is defined by the appended claims. It is to be understood that the naming of the described functional units is only exemplary and that also other types of functional units which may be configured to obtain functionality which fall within the inventive scope of this document may be used to replace the ones used in the given examples.

### ABBREVIATIONS

- AIS: Automatic Identification Signals
- IETF: Internet Engineering Task Force
- ITU-T: International Telecommunication Union, Telecommunication standardization section
- OAM: Operations, Administrations, and Management
- PE: Provider Edges
- RDI: Reverse Detect Indication
- SIA: Service level Agreement
- VIAN: Virtual local Area Networks
- MEP: Maintenance Ehd Point
- MIP: Maintenance Intermediate Point

## Claims

1. A method of handling Operation, Administration and Maintenance (OAM) messages received from at least one originating end-node of a communication network and having the purpose of providing information on the connectivity between a respective originating end-node and a corresponding terminating end-node, wherein the method, being executable on a first intermediate node comprises that the amount of said OAM messages forwarded from the first intermediate node to a second intermediate node via a physical link is limited by forwarding (303b) a received OAM message via said physical link in case a link state indicator associated with said physical link is not updated or if another corresponding OAM message has not been received recently by the first intermediate node, and by responding (303a, 304a) to the received OAM message on the basis of said link state indicator without forwarding it via said physical link in case said indicator is updated or if the another corresponding OAM message has been received recently by the first intermediate node, said link state indicator being updatable (403) on the basis of the response to an intermediate OAM message, originating at said first intermediate node.

2. A method according to claim 1, wherein whether said link state indicator is updated or not is determined on the basis of content of a link state table.

3. A method according to claim 1 or 2, wherein said updating comprises the further steps of:
- generating (401) an intermediate OAM message and transmitting said intermediate OAM message to said second intermediate node,
- receiving (402) a response to said intermediate OAM message or recognising the absence of a response to a predefined number of intermediate OAM messages, and
- updating (403) said link state indicator on the basis of said response or absence of response.

4. A method according to claim 3, wherein the updating of the link state indicator is repeated at a predefined rate.

5. A method according to claim 4, comprising the further steps of:
- updating said link state indicator to a faulty link state, in case no response to a predefined number of consecutive internal OAM messages have been received within a predefined response time interval, and
- distributing an error message indicating said faulty link state.

6. A method according to any of claims 1-5, wherein an updating of said link state indicator is valid for a pre-determined update time interval.

7. An arrangement (500) for handling Operation, Administration and Maintenance (OAM) messages received from at least one first end-node of a communication network and having the purpose of providing information on the connectivity between the first end-node and a second end-node, wherein the arrangement (500) comprises a detection unit (502) which is configured to limit the amount of said OAM messages forwarded from the arrangement (500) to an intermediate node (111) via a physical link (112) by forwarding a received OAM message via said physical link (112) via an OAM function unit (504) in case a link state indicator (503) associated with said physical link (112) is not updated or if another corresponding OAM message has not been received recently by the arrangement (500), and by responding to the received OAM message on the basis of said link state indicator (503) without forwarding it via said physical link (112) in case said indicator (503) is updated or if the another corresponding OAM message has been received recently by the arrangement (500), said link state indicator (503) being updatable by said OAM function unit (504) on the basis of the response to an intermediate OAM message, other than any of said received OAM messages, originating at said arrangement (500).

8. An arrangement (500) according to claim 7, wherein said detection unit (502) is configured to determine whether said link state indicator (503) is updated or not by interrogating a link state table.

9. An arrangement (500) according to claim 7 or 8, wherein said OAM function unit (504) is configured to perform said updating by:
- generating an intermediate OAM message and transmitting said intermediate OAM message to said intermediate node (111), and by
- updating said link state indicator (503) on the basis of a response to said intermediate OAM message received from said intermediate node (111), or on the basis of the absence of responses to a predefined number of transmitted intermediate OAM messages.

10. An arrangement (500) according to claim 9, wherein the OAM function unit (504) is configured to update the link state indicator (503) at a predefined rate.

11. An arrangement (500) according to claim 10, wherein said OAM function unit (504) is further adapted to:
- update said link state indicator (503) to a faulty link state, in case no response to a predefined number of consecutive internal OAM messages have been received within a predefined response time interval, and to
- distribute an error message indicating the faulty link state.

12. An arrangement (500) according to any of claims 7-11, wherein said detection unit (502) is configured to maintain said link state indicator (503) valid for a pre-determined update time interval.

13. A switch comprising an arrangement according to any of claims 7-12.

14. A router comprising an arrangement according to any of claims 7-12.

## Patentansprüche

1. Verfahren zur Handhabung von Betriebs-, Administrations- und Verwaltungs-(Operation, Administration and Maintenance - OAM-)Nachrichten, die von zumindest einem ausgehenden Endknoten eines Kommunikationsnetzwerks empfangen werden und den Zweck haben, Informationen über die Konnektivität zwischen einem jeweiligen ausgehenden Endknoten und einem entsprechenden terminierenden Endknoten bereitzustellen, wobei das Verfahren, das auf einem ersten Zwischenknoten ausführbar ist, umfasst, dass die Menge der OAM-Nachrichten, die von dem ersten Zwischenknoten über eine physische Verbindung an einen zweiten Zwischenknoten weitergeleitet wird, begrenzt wird, indem eine empfangene OAM-Nachricht über die physische Verbindung weitergeleitet (303b) wird, falls ein Verbindungszustandsindikator in Verbindung mit der physischen Verbindung nicht aktualisiert wird oder falls eine andere entsprechende OAM-Nachricht nicht jüngst durch den ersten Zwischenknoten empfangen worden ist, und indem auf die empfangene OAM-Nachricht auf der Grundlage des Verbindungszustandsindikators geantwortet (303a, 304a) wird, ohne sie über die physische Verbindung weiterzuleiten, falls der Indikator aktualisiert wird oder falls die andere entsprechende OAM-Nachricht jüngst durch den ersten Zwischenknoten empfangen worden ist, wobei der Verbindungszustandsindikator auf der Grundlage der Antwort auf eine Zwischen-OAM-Nachricht, die von dem ersten Zwischenknoten ausgeht, aktualisierbar (403) ist.

2. Verfahren nach Anspruch 1, wobei, ob der Verbindungszustandsindikator aktualisiert wird oder nicht, auf der Grundlage von Inhalt einer Verbindungszustandstabelle bestimmt wird.

3. Verfahren nach Anspruch 1 oder 2, wobei das Aktualisieren die folgenden weiteren Schritte umfasst:
- Erzeugen (401) einer Zwischen-OAM-Nachricht und Übertragen der Zwischen-OAM-Nachricht an den zweiten Zwischenknoten,
- Empfangen (402) einer Antwort auf die Zwischen-OAM-Nachricht oder Erkennen der Abwesenheit einer Antwort auf eine vordefinierte Anzahl an Zwischen-OAM-Nachrichten, und
- Aktualisieren (403) des Verbindungszustandsindikators auf der Grundlage der Antwort oder der Abwesenheit von Antwort.

4. Verfahren nach Anspruch 3, wobei das Aktualisieren des Verbindungszustandsindikators bei einer vordefinierten Rate wiederholt wird.

5. Verfahren nach Anspruch 4, umfassend die folgenden weiteren Schritte:
- Aktualisieren des Verbindungszustandsindikators auf einen fehlerhaften Verbindungszustand, falls keine Antwort auf eine vordefinierte Anzahl an konsekutiven internen OAM-Nachrichten innerhalb eines vordefinierten Antwortzeitintervalls empfangen worden ist, und
- Verteilen einer Fehlernachricht, die den fehlerhaften Verbindungszustand angibt.

6. Verfahren nach einem der Ansprüche 1-5, wobei ein Aktualisieren des Verbindungszustandsindikators über ein vorbestimmtes Aktualisierungszeitintervall gültig ist.

7. Anordnung (500) zur Handhabung von Betriebs-, Administrations- und Verwaltungs-(OAM-)Nachrichten, die von zumindest einem ersten Endknoten eines Kommunikationsnetzwerks empfangen werden und den Zweck haben, Informationen über die Konnektivität zwischen dem ersten Endknoten und einem zweiten Endknoten bereitzustellen, wobei die Anordnung (500) eine Erfassungseinheit (502) umfasst, die konfiguriert ist, um die Menge der OAM-Nachrichten zu begrenzen, die von der Anordnung (500) über eine physische Verbindung (112) an einen Zwischenknoten (111) weitergeleitet wird, indem eine empfangene OAM-Nachricht über die physische Verbindung (112) über eine OAM-Funktionseinheit (504) weitergeleitet wird, falls ein Verbindungszustandsindikator (503) in Verbindung mit der physischen Verbindung (112) nicht aktualisiert wird oder falls eine andere entsprechende OAM-Nachricht nicht jüngst durch die Anordnung (500) empfangen worden ist, und indem auf die empfangene OAM-Nachricht auf der Grundlage des Verbindungszustandsindikators (503) geantwortet wird, ohne sie über die physische Verbindung (112) weiterzuleiten, falls der Indikator (503) aktualisiert wird oder falls die andere entsprechende OAM-Nachricht jüngst durch die Anordnung (500) empfangen worden ist, wobei der Verbindungszustandsindikator (503) durch die OAM-Funktionseinheit (504) auf der Grundlage der Antwort auf eine Zwischen-OAM-Nachricht, die von der Anordnung (500) ausgeht, außer einer beliebigen der empfangenen OAM-Nachrichten, aktualisierbar ist.

8. Anordnung (500) nach Anspruch 7, wobei die Erfassungseinheit (502) konfiguriert ist, um zu bestimmen, ob der Verbindungszustandsindikator (503) aktualisiert wird oder nicht, indem eine Verbindungszustandstabelle konsultiert wird.

9. Anordnung (500) nach Anspruch 7 oder 8, wobei die OAM-Funktionseinheit (504) konfiguriert ist, um das Aktualisieren durch Folgendes durchzuführen:
- Erzeugen einer Zwischen-OAM-Nachricht und Übertragen der Zwischen-OAM-Nachricht an den Zwischenknoten (111), und durch
- Aktualisieren des Verbindungszustandsindikators (503) auf der Grundlage einer Antwort auf die Zwischen-OAM-Nachricht, die von dem Zwischenknoten (111) empfangen wird, oder auf der Grundlage der Abwesenheit von Antworten auf eine vordefinierte Anzahl an übertragenen Zwischen-OAM-Nachrichten.

10. Anordnung (500) nach Anspruch 9, wobei die OAM-Funktionseinheit (504) konfiguriert ist, um den Verbindungszustandsindikator (503) bei einer vordefinierten Rate zu aktualisieren.

11. Anordnung (500) nach Anspruch 10, wobei die OAM-Funktionseinheit (504) ferner für Folgendes ausgelegt ist:
- Aktualisieren des Verbindungszustandsindikators (503) auf einen fehlerhaften Verbindungszustand, falls keine Antwort auf eine vordefinierte Anzahl an konsekutiven internen OAM-Nachrichten innerhalb eines vordefinierten Antwortzeitintervalls empfangen worden ist, und für:
- Verteilen einer Fehlernachricht, die den fehlerhaften Verbindungszustand angibt.

12. Anordnung (500) nach einem der Ansprüche 7-11, wobei die Erfassungseinheit (502) konfiguriert ist, um den Verbindungszustandsindikator (503) über ein vorbestimmtes Aktualisierungszeitintervall gültig zu halten.

13. Schalter, umfassend eine Anordnung nach einem der Ansprüche 7-12.

14. Router, umfassend eine Anordnung nach einem der Ansprüche 7-12.

## Revendications

1. Procédé permettant de traiter des messages d'exploitation, d'administration et de maintenance (OAM) reçus en provenance d'au moins un nœud terminal source d'un réseau de communication et ayant pour but de fournir des informations sur la connectivité entre un nœud terminal source respectif et un nœud terminal destinataire correspondant, dans lequel le procédé, étant exécutable sur un premier nœud intermédiaire, comprend le fait que le volume desdits messages OAM expédiés du premier nœud intermédiaire à un second nœud intermédiaire via une liaison physique est limité en expédiant (303b) un message OAM reçu par ladite liaison physique dans le cas où un indicateur d'état de liaison associé à ladite liaison physique n'est pas mis à jour ou si un autre message OAM correspondant n'a pas été reçu récemment par le premier nœud intermédiaire, et en répondant (303a, 304a) au message OAM reçu sur la base dudit indicateur d'état de liaison sans l'expédier via ladite liaison physique dans le cas où ledit indicateur est mis à jour ou si l'autre message OAM correspondant a été reçu récemment par le premier nœud intermédiaire, ledit indicateur d'état de liaison pouvant être mis à jour (403) sur la base de la réponse à un message OAM intermédiaire, généré par ledit premier nœud intermédiaire.

2. Procédé selon la revendication 1, dans lequel la question de savoir si l'indicateur d'état de liaison est mis à jour ou non est déterminée sur la base du contenu d'un tableau d'état de liaison.

3. Procédé selon la revendication 1 ou 2, dans lequel ladite mise à jour comprend les étapes supplémentaires de :
- génération (401) d'un message OAM intermédiaire et de transmission dudit message OAM intermédiaire audit second nœud intermédiaire,
- réception (402) d'une réponse audit message OAM intermédiaire ou de reconnaissance de l'absence de réponse à un nombre prédéfini de messages OAM intermédiaires, et
- mise à jour (403) dudit indicateur d'état de liaison sur la base de ladite réponse ou de l'absence de réponse.

4. Procédé selon la revendication 3, dans lequel la mise à jour de l'indicateur d'état de liaison est renouvelée à une fréquence prédéfinie.

5. Procédé selon la revendication 4, comprenant les étapes supplémentaires de :
- mise à jour dudit indicateur d'état de liaison sur un état de liaison défectueux, dans le cas où aucune réponse à un nombre prédéfini de messages OAM internes consécutifs n'a été reçue dans un intervalle de temps de réponse prédéfini, et
- distribution d'un message d'erreur indiquant ledit état de liaison défectueux.

6. Procédé selon l'une quelconque des revendications 1 à 5, dans lequel une mise à jour dudit indicateur d'état de liaison est valide pendant un intervalle de temps de mise à jour prédéterminé.

7. Agencement (500) permettant de traiter des messages d'exploitation, d'administration et de maintenance (OAM) reçus en provenance d'au moins un premier nœud terminal d'un réseau de communication et ayant pour but de fournir des informations sur la connectivité entre le premier nœud terminal et un second nœud terminal, dans lequel l'agencement (500) comprend une unité de détection (502) qui est configurée pour limiter le volume desdits messages OAM expédiés de l'agencement (500) à un nœud intermédiaire (111) via une liaison physique (112) en expédiant un message OAM reçu par ladite liaison physique (112) via une unité de fonction OAM (504) dans le cas où un indicateur d'état de liaison (503) associé à ladite liaison physique (112) n'est pas mis à jour ou si un autre message OAM correspondant n'a pas été reçu récemment par l'agencement (500), et en répondant au message OAM reçu sur la base dudit indicateur d'état de liaison (503) sans l'expédier via ladite liaison physique (112) dans le cas où ledit indicateur (503) est mis à jour ou si l'autre message OAM correspondant a été reçu récemment par l'agencement (500), ledit indicateur d'état de liaison (503) pouvant être mis à jour par ladite unité de fonction OAM (504) sur la base de la réponse à un message OAM intermédiaire, autre qu'un quelconque desdits messages OAM reçus, généré au niveau dudit agencement (500) .

8. Agencement (500) selon la revendication 7, dans lequel ladite unité de détection (502) est configurée pour déterminer si l'indicateur d'état de liaison (503) est mis à jour ou non en interrogeant un tableau d'état de liaison.

9. Agencement (500) selon la revendication 7 ou 8, dans lequel ladite unité de fonction OAM (504) est configurée pour effectuer ladite mise à jour par :
- la génération d'un message OAM intermédiaire et la transmission dudit message OAM intermédiaire audit nœud intermédiaire (111), et par
- la mise à jour dudit indicateur d'état de liaison (503) sur la base d'une réponse audit message OAM intermédiaire reçue en provenance dudit nœud intermédiaire (111), ou sur la base de l'absence de réponses à un nombre prédéfini de messages OAM intermédiaires transmis.

10. Agencement (500) selon la revendication 9, dans lequel l'unité de fonction OAM (504) est configurée pour mettre à jour l'indicateur d'état de liaison (503) à une fréquence prédéfinie.

11. Agencement (500) selon la revendication 10, dans lequel ladite unité de fonction OAM (504) est en outre adaptée pour :
- mettre à jour ledit indicateur d'état de liaison (503) su un état de liaison défectueux, dans le cas où aucune réponse à un nombre prédéfini de messages OAM internes consécutifs n'a été reçue dans un intervalle de temps de réponse prédéfini, et pour
- distribuer un message d'erreur indiquant l'état de liaison défectueux.

12. Agencement (500) selon l'une quelconque des revendications 7 à 11, dans lequel ladite unité de détection (502) est configurée pour maintenir ledit indicateur d'état de liaison (503) valide pendant un intervalle de temps de mise à jour prédéterminé.

13. Commutateur comprenant un agencement selon l'une quelconque des revendications 7 à 12.

14. Routeur comprenant un agencement selon l'une quelconque des revendications 7 à 12.
